Europäisches Patentamt

European Patent Office

Office européen des brevets

(11) Publication number: 0 403 724

A1

# EUROPEAN PATENT APPLICATION

(21) Application number: 90102310.1

(22) Date of filing: 06.02.90

(51) Int. Cl.⁵: H05K 11/02, B60R 11/02, H04B 1/08

(30) Priority: 22.06.89 JP 158322/89

(43) Date of publication of application:
27.12.90 Bulletin 90/52

(84) Designated Contracting States:
DE FR GB

(71) Applicant: PIONEER ELECTRONIC
CORPORATION
No. 4-1, Meguro 1-chome
Meguro-ku Tokyo 153(JP)

(72) Inventor: Hatori, Tomoyasu, Pioneer
Electronic Corporation
Kawagoe Kojo, 25-1, Aza Nishimachi
Oaza Yamada, Kawagoe-shi, Saitama 350(JP)
Inventor: Kobayashi, Hideaki, c/o Pioneer
Electronic Corpo.
Kawagoe Kojo, 25-1, Aza Nishimachi
Oaza Yamada, Kawagoe-shi, Saitama 350(JP)
Inventor: Shishido, Osamu, c/o Pioneer
Electronic Corpo.
Kawagoe Kojo, 25-1, Aza Nishimachi
Oaza Yamada, Kawagoe-shi, Saitama 350(JP)
Inventor: Miyano, Koichi, c/o Pioneer
Electronic Corpo.
Kawagoe Kojo, 25-1, Aza Nishimachi
Oaza Yamada, Kawagoe-shi, Saitama 350(JP)
Inventor: Matsumot, Isao, c/o Pioneer
Electronic Corpo.
Kawagoe Kojo, 25-1, Aza Nishimachi
Oaza Yamada, Kawagoe-shi, Saitama 350(JP)

(74) Representative: Reinhard, Skuhra, Weise
Friedrichstrasse 31
D-8000 München 40(DE)

(54) Automotive audio apparatus.

(57) The present invention provides an automotive audio apparatus removably mounted through connection terminals to a bracket box installed in an automobile cabin, which comprises; a storage box (10) in which the audio apparatus removed from said bracket box is to be placed; a battery (14) for supplying power through one of a plurality of connection terminals (13, 13') of said storage box (10) to the audio apparatus placed therein so as to back up to the memory device thereof; and a solar cell (15) connected to said battery through a diode (16) for charging electric power; whereby the audio apparatus is powered, while installed in said storage box. This audio apparatus can also be made to receive the desired broadcast to record the latest traffic information in a memory device or tape recorder, whereby the driver can afterwards hear the latest traffic information that was broadcast when he was away from the car.

# F I G. 1

# AUTOMOTIVE AUDIO APPARATUS

## BACKGROUND OF THE INVENTION

### Field of the Invention

The present invention relates to an audio apparatus such as a car radio removably mounted in a bracket box which is installed beforehand in a cabin near the driver's seat.

### Description of the Prior Art

Automotive audio apparatuses have conventionally been installed in a mounting space prepared in the car and then secured by screws. They are dismounted by removing the screws.

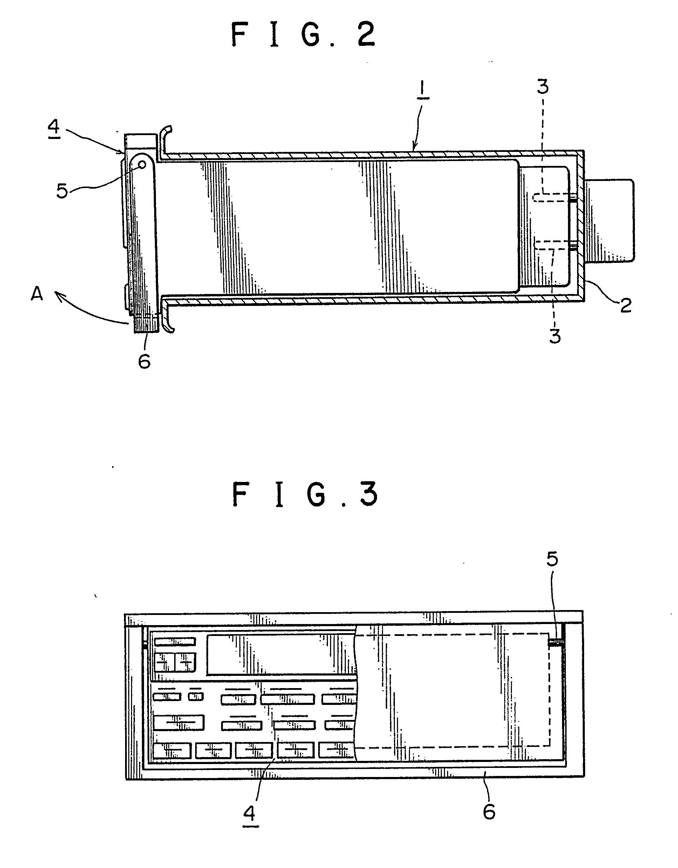

This method of mounting and dismounting the audio apparatuses takes time and labor, and their handling is not easy. To make the work easier, it is a common practice to install beforehand a bracket box in the cabin near the driver's seat as shown in Figure 2 and mount or dismount the audio apparatus into or from the bracket box. This type of mounting structure is called a quick-release mechanism.

In more detail, reference numeral 1 in Figure 2 represents a bracket box that is securely mounted with screws in a mounting space prepared beforehand in the vehicle cabin. The bracket box 1 may be formed by bending a metal plate into a square cylinder with a bottom. A bottom plate portion 2 on the rear side has a plurality of electrical connection terminals 3 projecting inwardly therefrom.

Designated 4 is an automotive audio apparatus removably mounted in the bracket box 1. When installed in the bracket box 1, the audio apparatus 4 makes electrical connection with the terminals 3 at the rear end portion of the bracket box 1 to be supplied by a power source.

As shown in Figure 3, a U-shaped handle 6 is attached to the front of the audio apparatus 4 so that it is forwardly rotatable about pivoting shafts 5 provided at each side of the apparatus near the front.

In such a quick-release mechanism, as described in the Japanese Utility Model Preliminary Publication No. Showa 62-69873, there is provided a lock mechanism (not shown) between the bracket box 1 and the audio apparatus 4. When, for instance, the handle 6 is rotated in the direction of arrow A until it comes in front of the audio apparatus 4, the lock mechanism is unlocked allowing the audio apparatus 4 to be drawn out when pulled by the handle 6.

In the audio apparatuses with such a quick-release mechanism, their mounting and dismounting can be done very easily. Thus, when for example a driver leaves the car, he can withdraw and carry with him the audio apparatus or put it in the car trunk to protect it against theft.

This kind of audio apparatuses with the quick-release mechanism, however, requires a backup supply for keeping a radio receiver's preset channel or a clock energized when the apparatus is pulled out of the bracket box in the vehicle. Thus, the apparatus needs a backup battery.

In Europe, recent years have seen inauguration of broadcasting services such as ARI (Autofahrer Rundfunk Information) and RDS (Radio Data System) for making use of high streets or freeways more efficiently, which provide traffic and various other information through FM multiplex broadcasting so as to prevent each driver from getting involved by a heavy traffic stagnation or fatal accidents caused thereby.

Therefore, when the audio apparatus body is pulled out of the bracket box and placed in the car trunk, traffic information aired by such broadcasting may be recorded in memory or tape recorder so that when a driver returns to his car he can listen to the latest information. There is a possibility of such a need prevailing in near future.

To meet such a situation with the conventional audio apparatuses, the driver has to keep the radio receiver turned on and also activate the memory or tape recorder. The conventional backup battery, however, has not a sufficient capacity to keep the radio and associated devices energized for information recording for a long period of time.

Although it may be possible to bring a power wire from a car battery to the trunk for use on the radio apparatus, many hours of use of the car battery will reduce the battery's voltage level and hence make engine starting difficult.

## SUMMARY OF THE INVENTION

Accordingly, this invention has been accomplished to meet the diversifying needs of drivers and overcomes the problems encountered with the conventional apparatuses. Its objective is to provide an automotive audio apparatus which, when placed in a storage box in the car trunk, can keep the memory and receiver energized for many hours.

To achieve the above objective, the automotive audio apparatus according to this invention comprises; a storage box in which the audio apparatus removed from the bracket box is to be placed; a battery for supplying power through one of a plurality of connection terminals of the storage box to the audio apparatus placed therein so as to back up the memory device thereof; and a solar cell connected to the battery through a diode for charging electric power; whereby the audio apparatus is powered, while installed in the storage box. This automotive audio apparatus further comprises a tuner formed with an antenna terminal which is connected to an antenna for receiving RF signals through one of the connection terminals, whereby necessary information can be recorded in the memory device or the like if the tuner is left tuned to a specific broadcast, even when the driver is away from the car.

## BRIEF DESCRIPTION OF THE DRAWINGS

Figure 1 is a schematic connection diagram showing one example embodiment of the invention;

Figure 2 is a cross section showing the quick-release mechanism; and

Figure 3 is a front view of one example of audio apparatus.

## DETAILED DESCRIPTION OF THE PREFERRED EMBODIMENT

One embodiment of the invention will now be described by referring to the accompanying drawings.

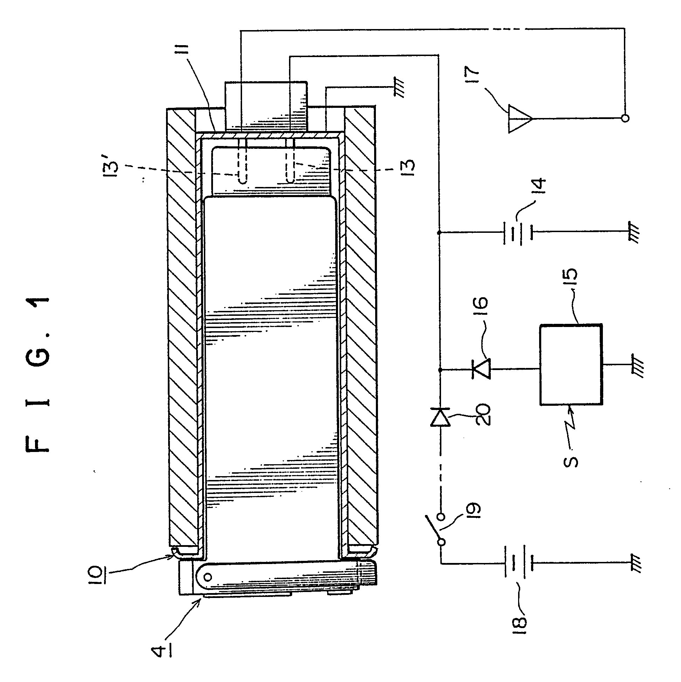

Figure 1 shows an embodiment of the invention, in which reference numeral 10 denotes a storage box in which an audio apparatus 4 such as a tuner taken out of the bracket box 1 of Figure 2 is installed. The storage box 10, like the bracket box 1, is formed by bending a metal plate into a square cylinder with a bottom. On the bottom plate portion 11 at the rear, the storage box 10 also has a plurality of connection terminals 13, 13' erected inwardly for electrical connection with the audio apparatus.

This storage box 10 is installed in, for example, the trunk room (not shown) of the car.

The connection terminal 13 at the bottom plate portion 11 of the storage box 10 is connected to a battery 14 to supply electric current to the audio apparatus installed in the storage box 10. The battery 14 may be installed in a battery box (not shown) formed integral with the storage box 10 or separately in the trunk room of the vehicle.

The battery 14 is connected through a diode 16 with a solar cell 15, which feeds charging currents to the battery 14. The solar cell is arranged on a rear parcel tray where it is radiated with direct sun rays.

In the above configuration, the solar cell 15 on the rear parcel tray in the automobile is exposed to sun rays S and produces electric power. Its output is supplied through the diode 16 to the battery 14 to charge it. Thus, the battery is always charged by the solar cell 15.

When the car is stopped, a driver pulls the audio apparatus 4 out of the bracket box 1 near the driver's seat and then places it in the storage box 10 in the car trunk. The audio apparatus 4 is then supplied by the battery 14, as when installed in the bracket box 1.

The audio apparatus 4 therefore receives memory backup current for retaining preset data such as reception frequency of the built-in tuner. In this way, the memory backup is provided for many hours. A capacitor is used in the audio apparatus so as to temporarily back up the memory when the audio apparatus 4 is transferred from the bracket box 1 into the storage box 10, thus preventing the loss of data in memory.

Not only is the memory backup current supplied as described above, but it is also possible to use another connection terminals 13' in the storage box 10 to supply received RF (reception frequency) signals from an antenna 17 to the antenna terminal of the tuner and to supply power from the battery 14 to the tuner to keep it in operation.

In this case, necessary information can be recorded in memory or other recording means such as tape recorder (not shown) even when a driver leaves his car. For examle, with the situation that the tuner is left energized and tuned to the ARI broadcast, when a DK (Durchsage Kennung) signal of the ARI broadcast is demodulated, the recording means is started.

With this arrangement, while the driver is away from the car, the latest traffic information is recorded by the recording means. Likewise, the tuner may be left tuned to the RDS broadcast and the recording means made to start when the TA (Traffic - Announcement Identification) data signal of the RDS broadcast is demodulated. This also allows the latest traffic information to be recorded by the recording means while the driver is away from his car.

The recorded information will be played back when the driver returns to the car, pulls the audio apparatus 4 from the storage box 10 and sets it in the bracket box 1 near the driver's seat. In this way the driver can obtain the latest traffic information aired while he was away.

As shown in Figure 1, power may be supplied from a car battery 18 through an accessory switch 19 to the battery 14 of the storage box 10.

In this case, the battery for the storage box 10 is charged by the car battery 18 through the accessory switch 19 and diode 20, the accessory switch being turned on while the car is driven. Therefore, the battery 14 for the storage box 10 can be fully charged at all times.

Advantages of the Invention

As described in the foregoing, this invention provides a power backup, when a driver leaves his car, for preset channel memory or clock, in the audio apparatus by simply pulling the audio apparatus out of the bracket box and putting it in the storage box in the car trunk. While the removed audio apparatus is placed in the car trunk, it can also be made to receive the desired broadcast to record the latest traffic information in memory or tape recorder. Thus, when the driver returns to his car, he can ear the latest traffic information that was broadcast when he was away.

Another specific feature is that the above operation can be achieved without burdening the car battery.

**Claims**

1. An automotive audio apparatus removably mounted through connection terminals to a bracket box installed in an automobile cabin, comprising; a storage box in which the audio apparatus removed from said bracket box is to be placed; a battery for supplying power through one of a plurality of connection terminals of said storage box to the audio apparatus placed therein so as to back up the memory device thereof; and a solar cell connected to said battery through a diode for charging electric power; whereby the audio apparatus is powered, while installed in said storage box.

2. An automotive audio apparatus as claimed in claim 1, wherein said audio apparatus further comprises a tuner formed with an antenna terminal, which terminal is further connected to an antenna for receiving RF signals through one of said connection terminals of said storage box, whereby necessary information can be recorded in said memory device or the like if said tuner is left tuned to a specific broadcast.

3. An automotive audio apparatus as claimed in claim 1, wherein said battery for supplying power to said audio apparatus is charged by the car battery through an accessory switch and a diode, said accessory switch being turned on while the car is driven so as to fully charge said battery.

4. An automotive audio apparatus as claimed in any one of claim 1 to claim 3, wherein said storage box and said battery connected thereto are installed in a trunk room of the car.

5. An automotive audio apparatus as claimed in any one of claim 1 to claim 4, wherein said solar cell is arranged on a rear parcel tray where it is radiated with direct sun rays.

# F I G . 1

# F I G . 2

# F I G . 3

## European Patent Office

## EUROPEAN SEARCH REPORT

| DOCUMENTS CONSIDERED TO BE RELEVANT | EP 90102310.1 |

| Category | Citation of document with indication, where appropriate, of relevant passages | Relevant to claim | CLASSIFICATION OF THE APPLICATION (Int. Cl.⁵) |
|---|---|---|---|
| A | FR - A1 - 2 522 599 (COLOMBIER) * Fig. 1; claim 1 * -- | 1,2 | H 05 K 11/02 B 60 R 11/02 H 04 B 1/08 |
| A | AT - B - 189 226 (SIEMENS & HALSKE) * Fig; page 2, lines 7-12; claim 1 * -- | 1,2 | |
| A | US - A - 2 866 891 (A.P.PRINC) * Fig. 1; column 1, lines 15-45 * -- | 1,2 | |
| A | FR - A1 - 2 451 698 (TECNOCONSULT SAS DI ARIETTO PALETTI) * Fig. 1,2; claim 1 * ---- | 1 | |

TECHNICAL FIELDS SEARCHED (Int Cl.⁵)

H 05 K
B 60 R
H 04 B

The present search report has been drawn up for all claims

| Place of search | Date of completion of the search | Examiner |
|---|---|---|
| VIENNA | 23-03-1990 | DRÖSCHER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82